Europäisches Patentamt

European Patent Office

Office européen des brevets

(19)

(11) **EP 0 980 186 A2**

(12) **EUROPEAN PATENT APPLICATION**

(43) Date of publication:
**16.02.2000  Bulletin 2000/07**

(51) Int. Cl.⁷: **H04N 7/58**,  H04N 7/24

(21) Application number: **99202518.9**

(22) Date of filing: **02.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority:  **10.08.1998 GB 9817302**

(71) Applicant: **NDS LIMITED**
**West Drayton, Middlesex UB7 0DQ (GB)**

(72) Inventors:
 • **Davies, Colin, Dr.**
  **Hale, Fordingbridge, Hampshire SP6 2NS (GB)**
 • **Huggett, Anthony R.**
  **Eastleigh, Hampshire SO50 5PZ (GB)**

 • **Stubbings, Clive A., Dr.**
  **Eastleigh, Hampshire SO50 7NW (GB)**
 • **Funnell, John S.**
  **Southampton SO15 2TU (GB)**
 • **Murray, Kevin A.**
  **Lockerley, Romsey, Hampshire SO51 0JR (GB)**
 • **Warburton, Richard J.**
  **Southampton, Hampshire SP30 2RP (GB)**

(74) Representative:
 **Anderson, Angela Mary**
 **NDS Limited,**
 **Gamma House,**
 **Enterprise Road**
 **Chilworth, Hampshire SO16 7NS (GB)**

(54) **Method and apparatus for managing a decoder buffer**

(57)     The present invention relates to digital data transmission and more precisely a method and apparatus for managing a decoder buffer.

In data transmission applications, such as digital video broadcasting, large amounts of data are encoded and transmitted to decoders having a decoder buffer. Management of the decoder buffer is very important as transmittal of too little data can result in the decoder buffer underflowing (becoming empty), or if too much data is transmitted the decoder buffer could overflow. Both decoder buffer overflow and underflow result in loss of data and the decoding process is adversely affected.

The present invention provides a method and apparatus for managing a decoder buffer such that decoder buffer overflow and underflow are minimised.

Fig.4.

**EP 0 980 186 A2**

## Description

The present invention relates to digital data transmission and more precisely a method and apparatus for managing a decoder buffer.

Standard resolution digital television uses a pixel resolution of 480 x 704 pixels with a frame rate of 30 frames per second. High definition television (HDTV) differs from standard television in having a much higher resolution. A number of differing HDTV standards have emerged, each differing in image resolution and/or frame rate. The table below illustrates some of the more common HDTV formats.

| Scanning Format (lines x pixels x frames/s) |
| --- |
| 1080 x 1920 x 30 |
| 720 x 1280 x 60 |
| 720 x 1280 x 30 |
| 480 x 704 x 60 |

Due to the superior resolution of HDTV over standard television, dedicated encoders and receivers are needed to both encode and decode HDTV pictures. In our co-pending United Kingdom patent application, GB 9807203.6, a technique is described, however, which enables HDTV pictures to be encoded using a number of standard television encoders. This technique describes how a HDTV source is split up into a number of segments which are then separately encoded by standard television encoders. These separately encoded segments are then recombined and processed to produce a HDTV compliant encoded signal.

Standard television encoders are designed to encode video in accordance with the various video compression standards, such as the Motion Picture Expert Group standard (MPEG and MPEG-2). These standards specify the requirements of standard television decoders, including the size of the decoder buffers. Standard television encoders are therefore designed to produce an amount of encoded video information within the limits of a standard television decoder buffer.

In a decoder buffer, data is received at either a constant or variable bit-rate. Video frames are removed from the decoder buffer at a constant rate as dictated by the frame rate. The data contained in each frame (or frame size) will differ depending on the way in which the frame was originally encoded. A decode time stamp (DTS) can be associated with each frame to indicate to the decoder when a frame should be removed from the decoder buffer. A frame can either be marked with a DTS or a DTS can be derived for a frame from the DTS of other frames. This helps ensure that the frame is decoded at the appropriate time.

The size of frames differs widely due to the way in which frames are encoded. Some frames, known as I-Frames, are generally the largest since they contain information which allows a complete frame to be reconstructed by a decoder. Two other types of frame, known as B-Frames and P-Frames, are generally much smaller in size, since they are used in conjunction with a previously reconstructed frame to reconstruct a new frame.

It is possible for an I-Frame to completely fill a decoder buffer. If the decoder buffer is already half full when such an I-Frame is sent, some of the I-Frame data will overflow the decoder buffer and be lost. This may cause the decoding process to breakdown.

If data is received at the decoder buffer at a slower rate than which data is removed the decoder buffer may become empty (or underflow). If this were to happen, the decoder would try to remove a frame from the decoder buffer, but the entire frame would not be present. This may also cause the decoding process to breakdown.

Further problems arise in the above-described situation where a number of standard television encoders are used to produce a single HDTV signal. The decoder buffer requirements as defined for a HDTV decoder are such that the collective size of multiple standard television decoder buffers is greater than the defined decoder buffer size for a HDTV decoder. If each of the individual standard television encoders produces large amounts of data for the same frame this may cause the HDTV decoder buffer to overflow.

Should a decoder buffer be allowed to overflow or underflow, this may cause the decoding process to breakdown. Since decoders have no control over the data they receive, management of the decoder buffers must be performed at the transmission end of the system.

In a standard encoder, a decoder buffer model is usually maintained to monitor the actual performance of a real decoder buffer. If the decoder buffer model is in danger of underflowing, the quantisation factor used in the encoder can be decreased causing more data to be produced to fill the decoder buffer. If the decoder buffer is in danger of overflowing, the quantisation factor used in the encoder can be increased, reducing the amount of data generated and sent to the decoder thereby allowing the decoder buffer to empty. This type of system, where feedback from the decoder buffer model is used to control the quantisation factor used by the encoder, is known as a closed-loop system.

In the situation where a number of standard encoders are used to encode segments of a HDTV picture, the situation may become more complicated. Reliable decoder buffer management must still be performed, however the problem is compounded by having to deal with many separate encoders. The standard closed-loop approach could be used, wherein each encoder alters the quantisation factor to control the occupancy of a decoder buffer. It is most desirable to use predominantly standard equipment, however, standard decoders and equipment are not designed to be used in such a configuration.

Accordingly, one aspect of the present invention is to provide a method and apparatus for managing a decoder buffer for use in substantially standard encoder systems.

According to a first aspect of the present invention there is provided a method of transmitting a digital signal comprising a succession of encoded quantities of information each quantity being of a variable size and representing information intended to be received by a decoder incorporating a decoder buffer, wherein each quantity of information has an associated decode time indicating the time at which the quantity should be removed from the decoder buffer by the decoder, the method comprising the steps of: transmitting the digital signal as a bitstream; biasing the bitrate of the bitstream to cause the decoder buffer to overflow; predicting from the decode times and size of the quantities of information an overflow of the decoder buffer; and adding stuffing bits to at least one quantity of information to be received by the decoder buffer prior to any predicted overflow to prevent the decoder buffer from overflowing.

According to a second aspect of the present invention there is provided a method for transmitting a television signal comprising a succession of encoded frames each representing picture information intended to be received by a decoder incorporating a decoder buffer, wherein each frame has an associated decode time indicating the time at which the frame should be removed from the decoder buffer the method comprising the steps of: generating a plurality of individual bitstreams each of which represents respective picture elements in a composite array of such picture elements; combining the individual bitstreams to form the said television signal such that each frame is represented by a variable number of encoder frame bits; initialising the transmission of the television signal in relation to the frame decode time to achieve at least a predetermined initial level of occupancy of the decoder buffer; adding stuffing bits to the encoded frame bits to limit the variations in decoder buffer occupancy caused by variations between frames in the number of frame bits; and biasing the transmission rate of the television signal to cause the buffer to overflow.

According to a third aspect of the present invention there is provided apparatus for transmitting a digital signal comprising a succession of encoded quantities of information each quantity being of a variable size and representing information intended to be received by a decoder incorporating a decoder buffer, wherein each quantity of information has an associated decoder time indicating the time at which the quantity should be removed from the decoder buffer by the decoder, the apparatus comprising: a transmitter for transmitting the digital signal as a bitstream at a bitrate to cause the decoder buffer to overflow; a first controller for predicting from the decode times and size of the quantities of information an overflow of the decoder buffer; and a second controller for adding stuffing bits to at least one quantity of information to be received by the decoder buffer prior to the predicted overflow to prevent the decoder buffer from overflowing.

According to a fourth aspect of the present invention there is provided apparatus for transmitting a television signal comprising a succession of encoded frames each representing picture information intended to be received by a decoder incorporating a decoder buffer, wherein each frame has an associated decode time indicating the time at which the frame should be removed from the decoder buffer the apparatus comprising: a generator for generating a plurality of individual bitstreams which represent respective picture elements in a composite array of such picture elements; a first controller for combining the individual bitstreams to form the said television signal such that each frame is represented by a variable number of encoder frame bits; a second controller for initialising the transmission of the television signal in relation to the frame decode times to achieve at least a predetermined initial level of occupancy of the decoder buffer; a third controller for adding stuffing bits to the encoded frame bits to limit the variations in decoder buffer occupancy caused by variations between frames in the number of frame bits; and a fourth controller for varying to transmission rate to cause the buffer to overflow.

The invention will now be described by way of example, with reference to the accompanying drawings, in which:

Figure 1 is a diagram showing an overview of the present invention;
Figure 2 is a diagram showing a high definition television image divided into a number of elements;
Figure 3 is diagram showing a number of examples of how a typical decoder buffer may vary over time;
Figure 4 is a diagram showing an overview of a first embodiment of the present invention;
Figure 5 is a diagram showing the relationship between buffer occupancy, bitrate and transmission start time; and

Figure 6 is a diagram showing an overview of a second embodiment of the present invention.

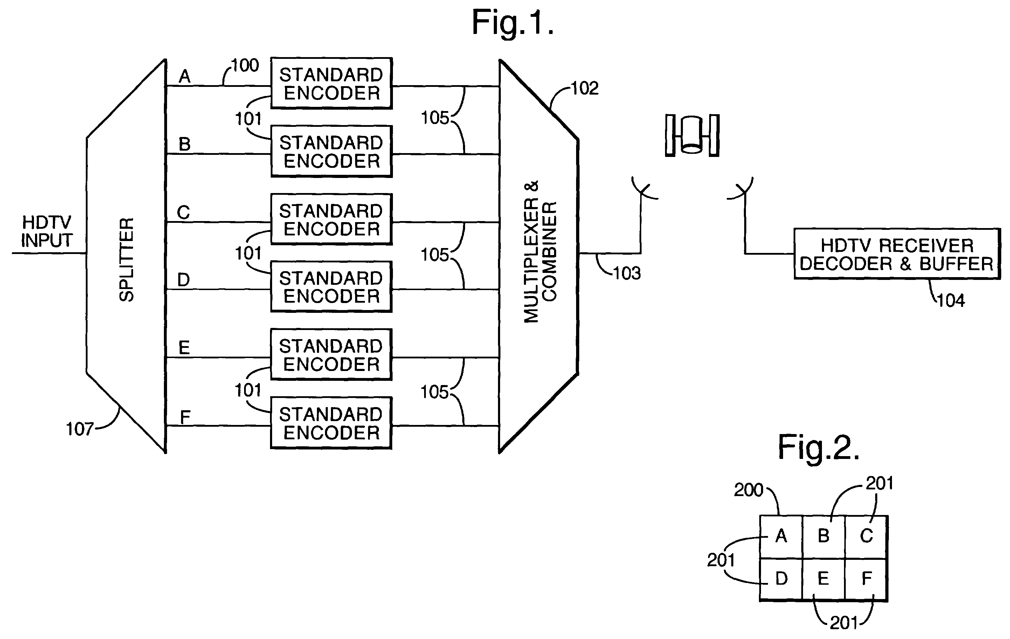

Referring now to Figure 1, there is shown a diagram showing an overview of the present invention. Figure 2 shows a large picture 200 which is divided up into a number of smaller segments 201 by a splitter 107. Each of the segments are fed to separate standard encoders 101 to produce a number of individual digitally encoded bitstreams 105. These individual bitstreams are then input to a multiplexer and combiner 102 where each of the bitstreams is combined and processed to produce a single HDTV bitstream 103. This HDTV bitstream is then transmitted via a suitable transmission channel to a suitable decoder 104 having a decoder buffer. Further details of the above-described system can be found in our co-pending United Kingdom patent application, GB 9807203.6.

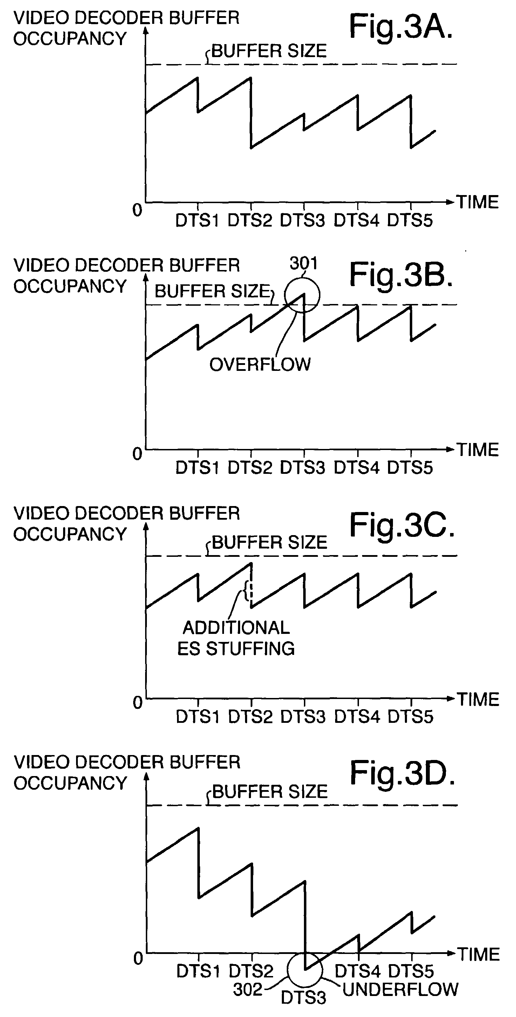

Turning now to Figure 3, there are shown a number of examples of how the occupancy of a video decoder buffer may typically change over time. In each of the examples, a constant input bitrate is assumed, although the same principles apply equally to variable bitrates.

In a first example, Figure 3a shows how the occupancy of a video decoder buffer may typically change over time. Frames having a decoder time-stamp (DTS) are removed from the video decoder buffer at a constant rate, as determined by the frame rate. As a frame is removed from the decoder buffer the buffer occupancy reduces by the size of the removed frame. In this example, the decoder buffer neither underflows nor overflows.

Figure 3b shows another example of how the occupancy of a decoder buffer may typically change over time. It can be seen that although frames are being removed from the decoder buffer, the overall occupancy of the decoder buffer is increasing. However, at 301 the buffer has overflowed, since the frame data rate into the decoder buffer is greater than the rate in which frame data is removed from the decoder buffer. Buffer overflow causes frame data to be lost and the decoding process will breakdown.

Figure 3c shows yet another example of how the occupancy of a video decoder buffer may typically change over time. In this example, the frame data rate into the decoder buffer is lower than the rate at which frame data is being removed. At 302, the decoder has attempted to remove a frame from the decoder, but the frame was not entirely present in the video decoder buffer at that time. Buffer underflow may also cause the decoding process to breakdown.

Successful management of the decoder buffer is therefore of vital importance to maintain the integrity of the decoding process. In the case of the present invention the amount of data produced cannot be altered, but the decoder buffer must still be successfully managed so that the occurrence of decoder buffer overflow or underflow is minimised.

In a situation where multiple independent standard encoders are used to produce higher definition television pictures, as already previously described, problems may arise especially where the combined capacity of each of the independent encoders buffers is greater than the permissible video buffer capacity of an associated HDTV decoder buffer. Such a problem may be encountered when using 6 standard encoders to produce HDTV at the highest resolutions (e.g. 1080 x 1920 pixels at 30 frames per second). The problem occurs since it is possible for a single video frame to entirely fill a standard video decoder buffer. If each of the six separate encoders were to simultaneously produce such a frame, the decoder video buffer would overflow (assuming the combined capacity of each of the separate encoder buffers was greater than the HDTV decoder buffer).

A standard decoder buffer, as defined by the Motion Pictures Expert Group (MPEG) MP@ML (Main Profile at Main Level) has a capacity of 1.8Mbits. A decoder buffer at MP@HL (Main Profile at High Level) has a capacity of 9.8Mbits, and a decoder buffer as defined by the American Television Standards Committee (ATSC) has a capacity of 8Mbits. For both of these high definition standards the total capacity of six standard decoder buffers is greater than capacity of a high definition buffer.

One way to overcome this problem would be to increase the size of the HDTV decoder buffer, but the constraints applied by the various standards groups prevent this. It is, however, necessary to ensure that the combined capacity of each of the separate encoder buffers is no greater than the capacity of the HDTV decoder buffer. In this case, the effective size of each of the separate encoder buffers must be reduced accordingly, to ensure that overflow of the combined decoder buffer cannot occur.

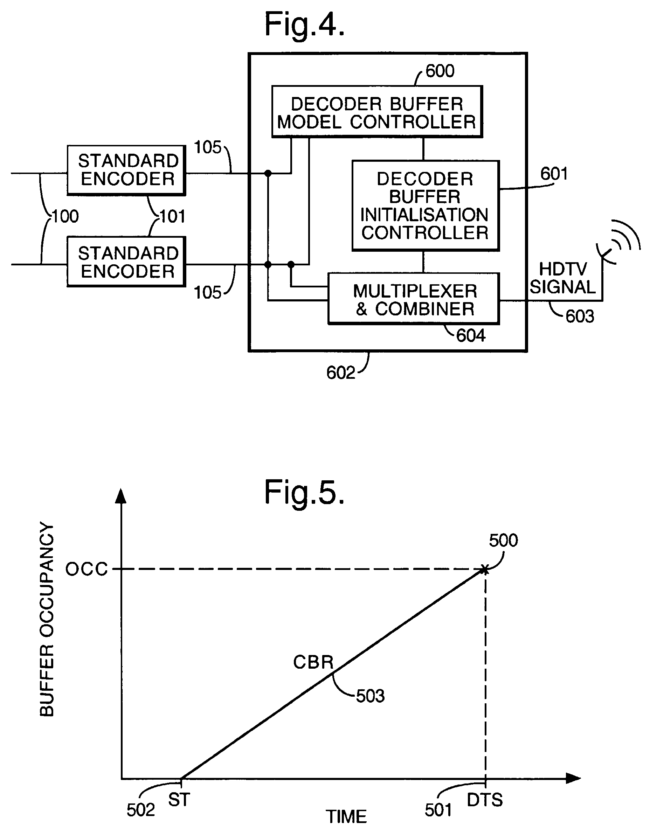

In Figure 4 a first embodiment of the present invention is shown in which the occurrence of buffer overflow and underflow is minimised through an appropriate buffer initialisation. Initialisation of the decoder buffer involves ensuring that the occupancy of the decoder buffer is at a predetermined level for an initial frame. If the initial buffer occupancy level chosen is too low, then the decoder buffer may underflow. If the initial buffer occupancy level chosen is too high, then the decoder buffer may overflow. Once the initial buffer occupancy level and DTS is chosen the encoder must calculate when to start outputting data so that the above described criteria are met in the decoder buffer.

Referring now to Figure 4, there is shown an overview of a first embodiment of the present invention. A number of standard encoders 101 are connected to a modified multiplexer and combiner 602, to produce a HDTV bitstream 603. A decoder buffer model controller 600 maintains a model of the occupancy of a decoder buffer for each of the individual encoders 101.

Prior to transmission of the HDTV signal a decoder buffer initialisation controller 601 calculates the start-time of the transmission to ensure that the HDTV decoder buffer is at a particular predetermined occupancy at the time when the first frame of a sequence is removed from the decoder buffer.

The accurate HDTV decoder buffer occupancy for initialisation is the combined occupancy of each of the individual standard decoder occupancies for the chosen start frame. It is also important to ensure that the total combined capacity of each of the individual decoder buffers does not exceed the capacity of the HDTV decoder buffer.

Once the required decoder buffer occupancy for initialisation is known the transmission start time can be calculated.

Figure 5 shows how the decoder buffer initialisation controller 601 calculates the transmission start time. The desired buffer occupancy 500 is that of the combined occupancies of each of the individual buffer models as determined by the decoder buffer model controller 600. The time by which that occupancy level should be reached is the time 501, or the DTS time of the initial frame of the chosen sequence. For ease of explanation a constant bit rate 503 is assumed, although the same principles apply also for variable bitrates. The start time can thus be expressed as:

$$StartTime = DTS - \frac{Occupancy}{Bitrate}$$

## Equation 1

DTS is known, being the first frame of the transmission. Occupancy is the predetermined occupancy, determined by the decoder buffer model controller 600.

Once initialisation has taken place, the decoder buffer should ideally never underflow or overflow, assuming that the encoders remain within their predefined encoding limits.

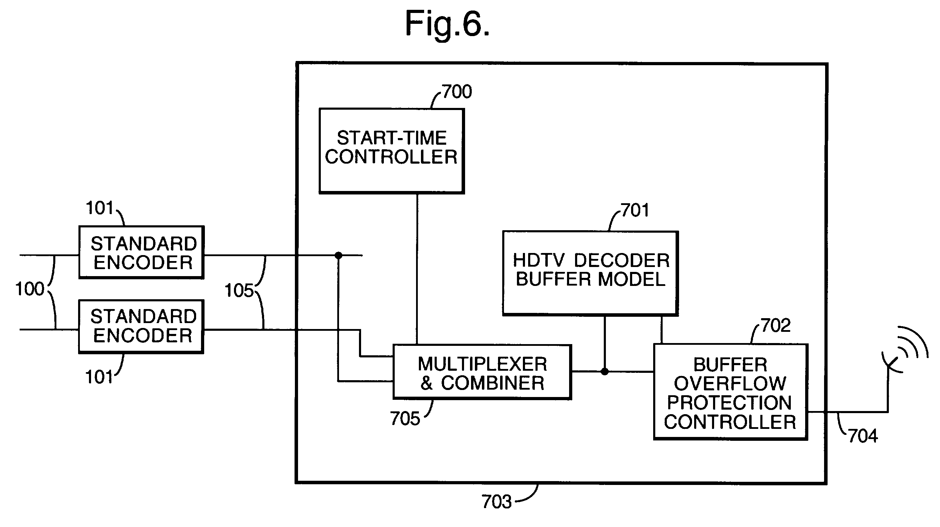

Where it is not desirable to monitor the occupancies of each of the separate encoder buffers, a somewhat simpler approach can be taken, as illustrated in Figure 6. Figure 6 is a diagram showing an overview of a second embodiment of the present invention.

A number of standard encoders 101 are connected to a modified multiplexer and combiner 703. The individual bitstreams are combined and multiplexed together by the multiplexer and combiner module 705 to produce a HDTV signal. A start time controller 700 calculates when to start transmitting the HDTV signal, such that a decoder buffer in a decoder is suitably initialised. In this embodiment, the initial decoder buffer occupancy level chosen for initialisation is not precisely calculated, unlike in the first embodiment, but a predetermined occupancy level is chosen. The chosen occupancy level needs to be sufficiently high so that immediate buffer underflow does not occur, but a small operating margin at the top of the buffer occupancy is also preferred. In the present embodiment a level of around 70 to 95% buffer capacity is chosen.

Once the required initialisation buffer occupancy is chosen, the start time can be calculated as per Equation 1.

Since the initialisation buffer occupancy is not accurately chosen, compared to the method of the first embodiment, the decoder buffer is still in danger of underflowing and/or overflowing. To reduce the possibility of buffer underflow, the HDTV bitstream signal 704 is transmitted to the decoder at a rate greater than the average rate at which data is removed from the decoder buffer. This will cause the decoder buffer to tend to overflow, thus minimising the possibility of buffer underflow.

To minimise the possibility of decoder buffer overflow a buffer overflow protection controller 702 is used, in conjunction with a HDTV decoder buffer model 701.

The HDTV decoder buffer model 701 models the occupancy of a HDTV decoder buffer in accordance with the HDTV signal. Once all the frame data for a frame has been transmitted to the decoder, the buffer overflow protection controller 702 predicts whether the decoder buffer will overflow before the next frame to be transmitted to the decoder is removed from the decoder buffer. If decoder buffer overflow is predicted to occur, the buffer overflow protection controller 702 adds stuffing to the end of the current frame to create enough space in the decoder buffer for the next frame to be transmitted to the buffer. Referring back to Figure 3, the function of the buffer overflow protection controller is shown in more detail.

Figure 3b shows buffer overflow occurring at 301. Figure 3d shows the same buffer occupancy graph as Figure 3b but with the buffer overflow protection in place. The buffer overflow protection controller 702 calculates that the buffer will overflow at 301, at the time DTS3, and also calculates the amount by which the buffer will overflow. To prevent the buffer from overflowing, stuffing data is added to the frame to be removed from the decoder buffer at time DTS2 (Figure 3d). This has the effect of freeing up sufficient space in the decoder buffer such that buffer no longer overflows at time DTS3.

With reference to Figure 5 the method by which decoder buffer overflow is calculated is explained.

The occupancy of the decoder buffer can be calculated:

$$Occupancy = (DTS - StartTime) * Bitrate$$

Since the size of the frame is known, the amount of free space in the decoder buffer after the frame has been removed is given by:

$$FreeSpace = BufferSize - (Occupancy - FrameSize)$$

The frame rate is also known which allows a prediction to be made as to whether the decoder buffer will overflow before the next frame is removed from the decoder buffer. The amount of data input to a decoder buffer in a frame period is thus:

$$TotalData = FramePeriod * Bitrate$$

The decoder buffer will therefore overflow if:

$$FreeSpace < TotalData$$

If the decoder buffer will overflow, stuffing can be added to the current frame, such that when that frame is removed from the decoder buffer enough space is made available in the decoder buffer to avoid overflow before the next frame is removed from the buffer.

The amount of stuffing to be added is thus:

$$Stuffing = (FramePeriod * Bitrate) - FreeSpace$$

The present invention is of particular application in the field of encoding high definition television signals, although it would be appreciated by anyone skilled in the art that it could also be applied to other applications where a large amount of data is encoded using a number of standard encoders. Such applications could include audio encoding and data processing.

## Claims

1. A method of transmitting a digital signal comprising a succession of encoded quantities of information each quantity being of a variable size and representing information intended to be received by a decoder incorporating a decoder buffer, wherein each quantity of information has an associated decode time indicating the time at which the quantity should be removed from the decoder buffer by the decoder, the method comprising the steps of:

   transmitting the digital signal as a bitstream;
   biasing the bitrate of the bitstream to cause the decoder buffer to overflow;
   predicting from the decode times and size of the quantities of information an overflow of the decoder buffer; and
   adding stuffing bits to at least one quantity of information to be received by the decoder buffer prior to any predicted overflow to prevent the decoder buffer from overflowing.

2. A method for transmitting a television signal comprising a succession of encoded frames each representing picture information intended to be received by a decoder incorporating a decoder buffer, wherein each frame has an associated decode time indicating the time at which the frame should be removed from the decoder buffer the method comprising the steps of:

   generating a plurality of individual bitstreams each of which represents respective picture elements in a composite array of such picture elements;
   combining the individual bitstreams to form the said television signal such that each frame is represented by a variable number of encoder frame bits;
   initialising the transmission of the television signal in relation to the frame decode time to achieve at least a predetermined initial level of occupancy of the decoder buffer;
   adding stuffing bits to the encoded frame bits to limit the variations in decoder buffer occupancy caused by variations between frames in the number of frame bits; and
   biasing the transmission rate of the television signal to cause the buffer to overflow.

**3.** The method of claim 1, wherein the step of adding stuffing bits consists of adding stuffing bits to one quantity of information only.

**4.** The method of claim 1 or 3, wherein the step of predicting an overflow of the buffer further comprises calculating the amount by which an overflow will occur to determine the number of stuffing bits.

**5.** The method of claim 2, further comprising limiting the maximum size of the plurality of encoded picture elements to a predetermined size.

**6.** The method of claim 2 or 5, wherein the predetermined size is the capacity of the decoder buffer.

**7.** The method of claim 2, 5 or 6, wherein the step of initialising to a predetermined initial level of occupancy initialises the decoder buffer to an occupancy of between 70 and 95% of the buffer capacity.

**8.** Apparatus for transmitting a digital signal comprising a succession of encoded quantities of information each quantity being of a variable size and representing information intended to be received by a decoder incorporating a decoder buffer, wherein each quantity of information has an associated decoder time indicating the time at which the quantity should be removed from the decoder buffer by the decoder, the apparatus comprising:

a transmitter for transmitting the digital signal as a bitstream at a bitrate to cause the decoder buffer to overflow;
a first controller for predicting from the decode times and size of the quantities of information an overflow of the decoder buffer; and
a second controller for adding stuffing bits to at least one quantity of information to be received by the decoder buffer prior to the predicted overflow to prevent the decoder buffer from overflowing.

**9.** Apparatus for transmitting a television signal comprising a succession of encoded frames each representing picture information intended to be received by a decoder incorporating a decoder buffer, wherein each frame has an associated decode time indicating the time at which the frame should be removed from the decoder buffer the apparatus comprising:

a generator for generating a plurality of individual bitstreams which represent respective picture elements in a composite array of such picture elements;
a first controller for combining the individual bitstreams to form the said television signal such that each frame is represented by a variable number of encoder frame bits;
a second controller for initialising the transmission of the television signal in relation to the frame decode times to achieve at least a predetermined initial level of occupancy of the decoder buffer;
a third controller for adding stuffing bits to the encoded frame bits to limit the variations in decoder buffer occupancy caused by variations between frames in the number of frame bits; and
a fourth controller for varying to transmission rate to cause the buffer to overflow.

**10.** The Apparatus of claim 8, wherein the second controller is adapted to add stuffing bits to one quantity of information only.

**11.** The Apparatus of claim 8 or 10, wherein the first controller further comprises a calculator to calculate the amount by which an overflow will occur to determine the number of stuffing bits.

# Fig.1.

SPLITTER 107

HDTV INPUT

A  100  STANDARD ENCODER
101
B  STANDARD ENCODER

C  STANDARD ENCODER
101
D  STANDARD ENCODER

E  STANDARD ENCODER
101
F  STANDARD ENCODER

105

MULTIPLEXER & COMBINER 102

103

HDTV RECEIVER DECODER & BUFFER
104

# Fig.2.

200    201

| A | B | C |
| D | E | F |

201

201

EP 0 980 186 A2

VIDEO DECODER BUFFER
OCCUPANCY

## Fig.3A.

BUFFER SIZE

0                                                      TIME
DTS1 DTS2 DTS3 DTS4 DTS5

VIDEO DECODER BUFFER
OCCUPANCY

301

## Fig.3B.

BUFFER SIZE

OVERFLOW

0                                                      TIME
DTS1 DTS2 DTS3 DTS4 DTS5

VIDEO DECODER BUFFER
OCCUPANCY

## Fig.3C.

BUFFER SIZE

ADDITIONAL
ES STUFFING

0                                                      TIME
DTS1 DTS2 DTS3 DTS4 DTS5

VIDEO DECODER BUFFER
OCCUPANCY

## Fig.3D.

BUFFER SIZE

0                                                      TIME
DTS1 DTS2              DTS4 DTS5
302     DTS3    UNDERFLOW

# Fig.4.

```
                    ┌─────────────────────────┐
                    │  ⌐600                    │
                    │  ┌───────────────────┐   │
                    │  │  DECODER BUFFER   │   │
                    │  │ MODEL CONTROLLER  │   │
                    │  └───────────────────┘   │
  ┌──────────┐ 105  │        ┌───────────┐     │  601
  │ STANDARD │⌐     │        │  DECODER  │     │ ⌐
  │ ENCODER  │──────●─────┐  │  BUFFER   │─────│──
  └──────────┘      │     │  │INITIALISATION│  │
  ⌐100    ⌐101      │     │  │CONTROLLER │     │
  ┌──────────┐      │     │  └───────────┘     │   HDTV
  │ STANDARD │      │     │        │           │   SIGNAL
  │ ENCODER  │──────●──┐  │  ┌───────────────┐ │──
  └──────────┘ 105  │  │  └──│  MULTIPLEXER  │ │   ⌐603
             ⌐      │  └─────│  & COMBINER   │ │
                    │        └───────────────┘ │
                    │              ⌐604        │
                    └─────────────────────────┘
                          602⌐
```

# Fig.5.

Fig.6.